(19) **Europäisches Patentamt / European Patent Office / Office européen des brevets**

(11) **EP 3 851 426 B1**

(12) **EUROPEAN PATENT SPECIFICATION**

(45) Date of publication and mention
of the grant of the patent:
**25.10.2023 Bulletin 2023/43**

(21) Application number: **20000019.8**

(22) Date of filing: **15.01.2020**

(51) International Patent Classification (IPC):
**C05C 9/00** *(2006.01)* **C05G 3/90** *(2020.01)*
**C05G 5/20** *(2020.01)* **C05G 5/30** *(2020.01)*

(52) Cooperative Patent Classification (CPC):
**C05C 9/00; C05G 3/90; C05G 5/20; C05G 5/30**

(54) **LIQUID COMPOSITIONS CONTAINING N-(N-BUTYL)THIOPHOSPHORIC TRIAMIDE (NBPT) AND THEIR USE AS AN ADDITIVE TO FERTILISERS CONTAINING AMIDE NITROGEN**

FLÜSSIGE ZUSAMMENSETZUNGEN UMFASSEND N-(N-BUTYL)THIOPHOSPHORIC TRIAMIDE (NBPT) UND DEREN VERWENDUNG ALS ZUSATZMITTEL FÜR DÜNGEMITTEL ENTHALTEND AMIDSTICKSTOFFE

COMPOSITIONS LIQUIDES CONTENANT N-(N-BUTYL)THIOPHOSPHORIC TRIAMIDE (NBPT) ET LEUR UTILISATION EN TANT QUE L'ADDITIF POUR L'ENGRAIS CONTENANT L'AZOTE DE L'AMIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.07.2021 Bulletin 2021/29**

(73) Proprietors:
• **Grupa Azoty S.A.**
**33-101 Tarnow (PL)**
• **Grupa Azoty Zaklady Azotowe Chorzów Spólka Akcyjna**
**41-503 Chorzów (PL)**

(72) Inventors:
• **Luberda-Durnas, Katarzyna**
**33-100 Tarnów (PL)**
• **Jasiak-Malota, Karolina**
**42-470 Siewierz (PL)**
• **Socha, Jan**
**33-100 Tarnów (PL)**
• **Cierpich, Anna**
**33-103 Tarnów (PL)**
• **Stachów-Piwowarska, Danuta**
**33-101 Tarnów (PL)**
• **Poreba, Monika**
**33-102 Tarnów (PL)**

(56) References cited:
**WO-A1-2017/031186 WO-A1-2018/152369
US-A1- 2019 248 714**

Remarks:
The file contains technical information submitted after the application was filed and not included in this specification

## Description

### Technical field

The invention relates to stabilisation of N-(n-butyl)thiophosphoric triamide (NBPT) both in a liquid composition and following application on a fertiliser. In particular, the subject matter of the invention is a liquid urease inhibitor composition containing N-(n-butyl)thiophosphoric triamide (NBPT), a method of manufacture of such a composition, and the use of such a composition as an additive to fertilisers containing amide nitrogen, including urea, UAN (highly concentrated nitrogen fertiliser in the form of an aqueous solution of urea and ammonium nitrate) and NPK (multicomponent fertilisers containing nitrogen, phosphorus and potassium).

### Prior art

To be assimilated by plants, the amide form of nitrogen has to undergo hydrolysis to the ammonium form

$$(CO(NH_2)_2 + 2H^+ + 2H_2O \xrightarrow{urease} NH_4^+ + H_2O + CO_2)$$

. This reaction is catalysed by urease, being an enzyme present in the soil. The rate of this transformation is different depending on the pH, temperature, humidity, depth of sowing, ion exchange ability and organic content of the soil. Thus, it is relatively quickly (up to a week) that the plants receive all nitrogen from fertilisation in an assimilable form but they are unable to consume it at this rate.

At a later stage, the nitrogen remaining after fertilisation may (1) become immobilised, (2) be released to the atmosphere in the form of ammonia, or (3) be oxidised to nitrate form, which in turn quickly becomes leached or denitrified to nitrogen oxides. Each of the above phenomena is not preferred and has a negative impact on the natural environment.

The amount of ammonia ($NH_3$) released to the atmosphere may be different depending on the substrate and environmental conditions but it is estimated that globally, only due to the use of l urea fertilisers, this value varies from 10-19%. The amount of ammonia ($NH_3$) released to the atmosphere may be different depending on the substrate and environmental conditions but it is estimated that globally, only due to the use of urea fertilisers, the value varies from 10-19%. The seriousness of the problem is evidenced by legal regulations introduced into the *Advisory Code for Good Agricultural Practice for Reducing Ammonia Emissions* and NEC Directive (Directive 2016/2284 of the European Parliament and of the Council of 14 December 2016 on the reduction of national emissions of certain atmospheric pollutants, amending Directive 2003/35/EC and repealing Directive 2001/81/EC) which compel actions to minimise the release of ammonia to the atmosphere.

One of the concepts of reducing the losses of nitrogen from the soil and reducing ammonia ($NH_3$) release is to introduce urease inhibitors to the urea-based fertilisers, the former is meant to suppress of the hydrolysis reaction of the amide nitrogen to the ammonium nitrogen.

The active substance in the form of N-(n-butyl)thiophosphoric triamide (NBPT) belongs to the group of substances acting inhibitory towards the urease enzyme. Said action is based on the blockade of three active sites of the enzyme by creating bindings to two nickel atoms and an oxygen atom of the carbamate bridge linking both metals, thus preventing the urea molecule to be attached.

NBPT was disclosed in the description of US 4,530,714 patent. Because of its properties (it is a waxy solid), direct application of it on fertilisers is, however, ineffective and results in lack of homogeneity of coating and, more importantly, low adsorption on the surface of fertilisers.

Additionally, NBPT easily becomes hydrolysed, as a consequence of which it decomposes to an inactive form, and is thermally unstable. Lack of good water-solubility makes it necessary to search for non-aqueous solvents (or solvent systems), which will enable NBPT to be easily applied on fertilisers and also to be stored for a longer period of time.

Solvent systems for NBPT have been searched for years. This is evidenced by an extensive patent literature.

The description of WO 2016054012 A1 patent application discloses triethyl phosphate and dimethyl sulfoxide (DMSO) as solvent compositions for NBPT. In the description, triethyl phosphate was suggested as a convenient solvent for NBPT and dicyandiamide as well, and dimethyl sulfoxide was suggested a co-solvent. Dyes, surfactants and stabilisers are provided for as optional additives. WO 2016054012 A1 discloses compositions of high stability, even up to 4 weeks in temperature up to 50°C.

In the description of US 2014/0047882 A1 patent application, NBPT is dissolved in aryl alkyl alcohols (e.g. in benzyl alcohol) with it being possible to use with an additional solvent in the form of glycol and its derivatives as well as in the form of propylene glycol. The use of a dye is provided for in the compositions. The disclosure mentions glycerine but does not provide for its use in the compositions themselves.

WO 2017/031186 A1 patent application discloses a liquid NBPT composition with monoalkanolamine as amine stabiliser. The application provides also for the use of DMSO in combination with monoalkanolamine. The compositions disclosed in the application showed stability at elevated temperature conditions.

In the description of WO 2010/096266 A1 application, NBPT is dissolved in amino alcohols and their mixtures and so the application covers the following substances: dimethanolamine, triethanolamine, dipropanolamine, tripropanolamine and diisopropanolamine. The application contemplates the use of glycol as a co-solvent, said glycol being also able to provide viscosity reduction and better control of composition distribution. Solvent compositions according to said application cause a reduction in NBPT volatility.

Available sources also present approaches, where the urease inhibitor is introduced already in the very method for obtaining urea (US 2015/0101379 A1, US 2007/0295047) or into liquid fertilisers (US 8,425,649 B2).

The majority of known approaches has so far not considered obtaining compositions which would contain stable NBPT (i.e. NBPT level not changing by more than 0.5% under storage conditions) and at the same time present no risk of explosion, be safe for personnel and be compatible with the fertiliser, i.e. cause no degradation and caking of it during storage. Moreover, such compositions which would be resistant to low temperatures (to -10°C).

Some systems still propose N-methylpyrrolidone (NMP), being considered toxic (WO 2013/107822 A1). With respect to the above, WO 2013/107822 A1 provides compositions being an alternative to said solvent.

Next, the description of US 4,530,714 patent suggests NBPT compositions with, *inter alia,* methylene chloride, diethyl ether, acetone, diisobutyl ketone, methanol, ethanol, propan-2-ol and toluene, which, however, will be of limited use on a production scale due to excessive combustibility and toxicity. The compositions of US 4,530,714 are used to inhibit urease activity. The description of US 5,698,003 patent discloses solutions obtained by dissolving NBPT in glycols and diols and in their esters; these mixtures, however, are thermally unstable at low temperatures, which leads to their solidification or NBPT crystallisation. The description of said patent, however, suggests that the use of glycols or glycol derivatives has the purpose of stabilising NBPT in compositions. A similar effect should be achieved using alkyl aryl polyether alcohols.

Out of known compositions, the description of WO 2017/144698 A1 application discloses NBPT and solvent compositions based on ethylene glycol, propylene glycol or diethylene glycol monobutyl ether with randomly selected co-solvents, if the crystallisation temperature of the urease inhibitor in the used solvent is lower than 0°C.

In the description of PL 232 924 B1 patent, solvent compositions for NBPT based on 2,5,7,10-tetraoxaundecane (TOU) and/or ethoxylated fatty amines and/or ethoxylated fatty alcohols can be found. These compositions are coated onto granulated urea or a fertiliser with urea, or applied to a moving fertiliser bed. Compositions according to PL 232 924 B1 are considered not harmful to the environment.

The description of US 2014/0090432 A1 patent application is based on the use of DMSO and the co-solvent are compounds from the family of polyalkylene glycols, glycerine and methanol. The compositions provide coating fertilisers with a layer in a controllable and homogeneous way. The used compositions employ solvents which are less harmful to the environment, safer and improve stability of NBPT. In particular, DMSO is suggested as a less toxic alternative to N-methylpyrrolidone. Description of US 2014/0090432 A1 discloses that the combination of protic and aprotic solvents yields highly stable NBPT solutions of low toxicity and of good viscosity parameters.

Further fertiliser compositions comprising N-(n-butyl)thiophosphoric triamide are disclosed in WO 2018/152369 A1 and US 2019/248714 A1.

Given the above, the object of the invention is to obtain an NBPT composition which would present no risk of explosion, be safe for personnel, be compatible with the fertiliser and at the same show high stability of NBPT and resistance to low temperatures.

**Subject matter of the invention**

The subject matter of the invention is a liquid composition for fertilisers containing amide nitrogen, according to claim 1.

Preferably, the dye is not a dye from the azo dye group.

The active substance content is in the range of 15-35 wt%.

The content is in the range of 0.01-1 wt% or an equivalent amount at a commercial concentration.

The amino alcohol is triethanolamine and the aprotic solvent from the group of sulfoxides is dimethyl sulfoxide.

Preferably, the dye is in the solid form and selected from the group consisting of acid blue with a concentration in the range of 100-200%.

In an embodiment, the liquid composition comprises 15-35 wt% N-(n-butyl)thiophosphoric triamide, up to 20 wt% benzyl benzoate, 50-75 wt% dimethyl sulfoxide and 0.01-1 wt% typical acid blue FG or an equivalent amount at a commercial concentration .

In an embodiment, the liquid composition comprises 15-35 wt% N-(n-butyl)thiophosphoric triamide, 50-70 wt% triethanolamine, up to 25 wt% N,N-dimethylacetamide and 0.01-1 wt% typical acid blue FG or an equivalent amount at a commercial concentration.

In an embodiment, the liquid composition comprises 15-35 wt% N-(n-butyl)thiophosphoric triamide, 20-40 wt% triethanolamine, 30-55 wt% propylene carbonate and 0.01-1 wt% typical acid blue FG or an equivalent amount at a commercial concentration.

In an embodiment, the liquid composition comprises 15-35 wt% N-(n-butyl)thiophosphoric triamide, 30-50 wt% dimethyl sulfoxide, 25-45 wt% glycerine and 0.01-1 wt% typical acid blue FG or an equivalent amount at a commercial concentration.

Furthermore, a method for obtaining a liquid composition is provided, wherein the method comprises

- mixing
  the active substance in the form of N-(n-butyl)thiophosphoric triamide and the solvent system, at a temperature up to 40°C to dissolve the active substance, and then
- adding a dye and stirring and heating at a temperature up to 40°C to dissolve the dye.

Additionally, the subject matter of the invention is a use of the liquid composition of the invention, according to claim 4, as an additive to nitrogen fertilisers, preferably to a fertiliser in the form of urea, highly concentrated nitrogen fertiliser in the form of an aqueous solution of urea and ammonium nitrate or a multicomponent fertiliser containing nitrogen, phosphorus and potassium.

Therefore, the scope of the disclosure covers liquid formulations containing N-(n-butyl)thiophosphoric triamide (NBPT), the formulations understood as a solvent system allowing stabilisation of the active substance in time, said substance being the urease inhibitor in this case.

The formulations of the present disclosure act as an additive to fertilisers containing amide nitrogen, i.e. nitrogen fertilisers in the form of, e.g., urea, UAN (highly concentrated nitrogen fertiliser in the form of an aqueous solution of urea and ammonium nitrate) or NPK (multicomponent fertilisers containing nitrogen, phosphorus and potassium).

Depending on the form of the fertiliser, the solvent composition with NBPT can be applied by coating (granulated fertilisers) or mixing (liquid fertilisers).

The formulations with NBPT proposed in the present disclosure are distinct in that they employ an aprotic solvent from the group of DMSO, or amino alcohols in the form of triethanolamine in a system with co-solvents: **(a)** trihydroxide alcohol **(b)** benzoic acid benzyl ester (c) propylene carbonate **(d)** N,N-dimethylacetamide, according to the appended claims.

Moreover, in order to verify the homogeneity of coating onto a fertiliser at a later stage, a dye is introduced into the system, according to the appended claims.

The compositions are prepared using a reactor provided with a heating system and a stirrer, into which all solvents together with NBPT are introduced. Everything is then stirred until the active substance is dissolved, then heated up to 40°C and a dye is added.

The inventive compositions with the urease inhibitor have all necessary features needed for them to be used on an industrial scale and that gives them a competitive advantage.

In particular, the compositions of the invention have physicochemical parameters, such as pH and density, making it possible to conveniently apply them to a solid fertiliser.

As far as the efficiency of the fertilisers with NBPT is considered, the key parameter is their stability, by which lack or a minor loss of the inhibitor (up to 15%) during ageing (up to 4 weeks) is understood. This can be achieved only by selecting such a solvent system, which will not cause degradation of NBPT active substance on the fertiliser bed. The formulations being the subject matter of this description meet the above requirement as confirmed by relevant studies which are described in the following.

### Brief description of the figures

To better present the invention, the description is accompanied by figures where

Fig. 1 shows the NBPT urease inhibitor content as a function of time in the compositions of the invention, and
Fig 2. shows the NBPT urease inhibitor content on a fertiliser carrier, four-week stability assays.

### Embodiments

In order to better understand the principles of operation and realisation of this invention, a description of embodiments is provided below. The following embodiments do not limit the scope of the invention, which scope is defined by the claims.

### Example 1

30-50 g dimethyl sulfoxide, 25-45 g glycerine and 15-35 g NBPT were introduced into a reactor provided with a stirrer and heating system. Everything was stirred until NBPT was completely dissolved. Then the heating system of the reactor was turned on. At the temperature of 40°C, 0.01-1 g dye was introduced. Stirring was continued until the dye was completely dissolved.

When a dye in the form of acid blue FG 200% (up to 1%) and a composition containing 40 wt% dimethyl sulfoxide, 34 wt% glycerine, 25 wt% NBPT are used, the resulting composition based on NBPT urease inhibitor is defined by physicochemical parameters, which make it possible to apply it to a solid fertiliser.

## Example 2

55-75 g dimethyl sulfoxide, up to 20 g benzyl benzoate and 15-35 g NBPT were introduced into a reactor provided with a stirrer and heating system. Everything was stirred until NBPT was completely dissolved. Then the heating system of the reactor was turned on. At the temperature of 40°C, 0.01-1 g dye was introduced. Stirring was continued until the dye was completely dissolved.

When a dye in the form of acid blue FG 200% and a composition containing 63 wt% dimethyl sulfoxide, 11 wt% benzyl benzoate, 25 wt% NBPT and up to 1 wt% acid blue FG 200% are used, the resulting composition based on NBPT urease inhibitor is defined by physicochemical parameters, which make it possible to apply it to a solid fertiliser.

## Example 3

50-70 g triethanolamine, up to 20 g N,N-dimethylacetamide and 15-35 g NBPT were introduced into a reactor provided with a stirrer and heating system. Everything was stirred and heated to the temperature of 40°C maximum until NBPT was completely dissolved. Then 0.01-1 g dye was added. Stirring and heating were continued until the dye was completely dissolved.

When a dye in the form of acid blue FG 200% and a composition containing 61 wt% triethanolamine, 13 wt% N,N-dimethylacetamide, 25 wt% NBPT and up to 1 wt% acid blue FG 200% are used, the resulting composition based on NBPT urease inhibitor is defined by physicochemical parameters, which make it possible to apply it to a solid fertiliser.

## Example 4

20-40 g triethanolamine, 35-55 g propylene carbonate and 15-35 g NBPT were introduced into a reactor provided with a stirrer and a heating system. Everything was stirred and heated to the temperature of 40°C maximum until NBPT was completely dissolved. Then 0.01-1 g dye was added. Stirring and heating were continued until the dye was completely dissolved.

When a dye in the form of acid blue FG 200% and a composition containing 30 wt% triethanolamine, 44 wt% propylene carbonate, 25 wt% NBPT and up to 1 wt% acid blue FG 200% are used, the resulting composition based on NBPT urease inhibitor is defined by the following physicochemical parameters, such as pH = 10.18; $\rho_{20°C}$ = 1.165 g/cm$^3$, which make it possible to apply it to a solid fertiliser.

## Example 5

The inventive formulations based on DMSO or triethanolamine and indicated co-solvents were composed in such a way that they are easily applied to a urea fertiliser on a production scale (viscosity up to 75 mm$^2$/s), can be stored for long under production conditions (NBPT level not changing by more than 0.5%), present no risk of explosion, are safe for personnel and compatible with the fertiliser, i.e. cause no degradation and caking of it during storage. Moreover, they are resistant to low temperatures (to -10°C).

All compositions prepared according to examples 1-4 were applied to a fertiliser, NBPT inhibitor level was assayed immediately after stabilisation by high pressure liquid chromatography (HPLC) according to PN-EN 15688 norm, and then after 4 weeks of ageing in climatic chambers (30°C) in closed containers.

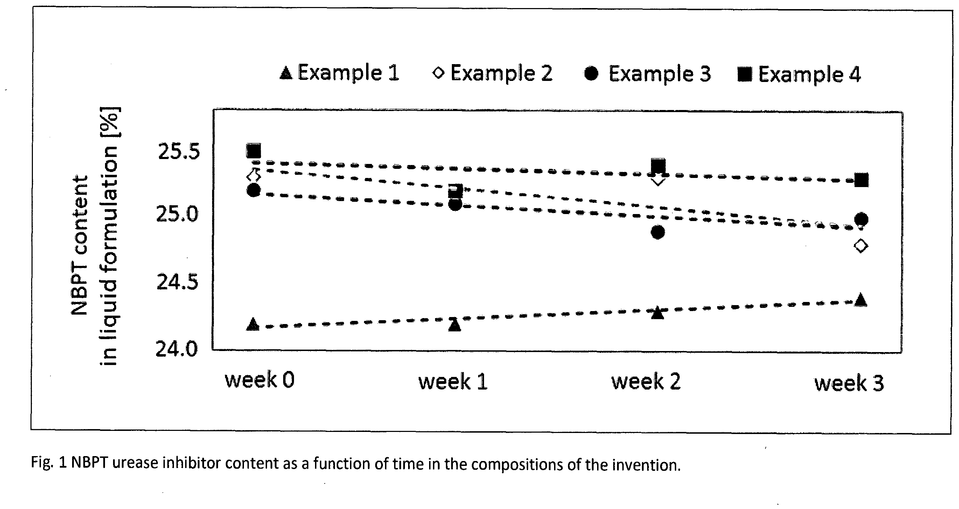

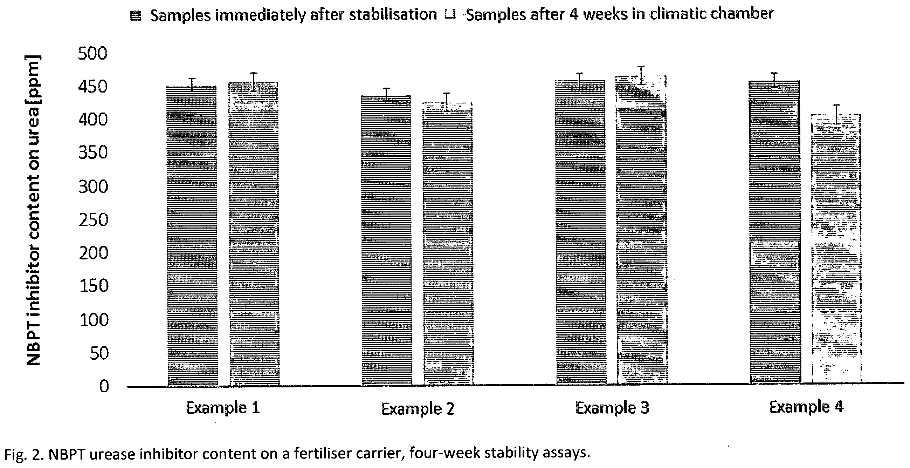

The obtained values confirm high stability of NBPT inhibitor applied to urea (for four weeks) in a given solvent system, with which the main objective, being the inhibition of urease action in the soil, will be achievable at a predetermined level. Thus, the innovativeness of the proposed compositions consists in their effective stabilisation of NBPT not only in the composition (Fig. 1) but also after application on the fertiliser carrier (Fig. 2).

It is worth noting that the results of the measurements of the NBPT content as well as its decrease may vary when different storage conditions and/or different assay techniques (assay conditions) are used. However, regardless of the method/conditions used, comparative measurements should always show NBPT stability in the composition according to the invention.

**Claims**

1. A liquid composition for fertilisers containing amide nitrogen, wherein the composition comprises

an active substance in the form of N-(n-butyl)thiophosphoric triamide and a solvent system, wherein the N-(n-butyl)thiophosphoric triamide content is in the range of 15-35 wt.%,
and the solvent system comprises solvent selected from DMSO or amino alcohols in the form of triethanolamine in a system with at least one co-solvent selected from: trihydroxide alcohol, benzoic acid benzyl ester, propylene carbonate and N,N-dimethylacetamide, wherein the composition comprises no methanol if the solvent is a sulfoxide and co-solvent is a trihydroxide alcohol, wherein
the composition comprises 50-75 wt.% dimethyl sulfoxide and up to 20 wt.% benzyl benzoate, or
the composition comprises 50-70 wt.% triethanolamine and up to 25 wt.% N,N-dimethylacetamide, or
the composition comprises 20-40 wt.% triethanolamine and 30-55 wt.% propylene carbonate, or
the composition comprises 30-50 wt.% dimethyl sulfoxide and 25-45 wt.% glycerine, wherein the composition additionally comprises a dye in the range of 0.01-1 wt.% being typical acid blue FG or an equivalent amount at a commercial concentration.

2. The liquid composition according to claim 1, **characterized in that** the dye is not a dye from the azo dye group.

3. The liquid composition according to claim 1, **characterized in that** the dye is in the solid form and selected from the group consisting of acid blue with a concentration in the range of 100-200%.

4. A use of the liquid composition comprising an active substance in the form of N-(n-butyl)thiophosphoric triamide, a dye and a solvent system comprising a solvent selected from DMSO or amino alcohols in the form of triethanolamine in a system with at least one co-solvent selected from: trihydroxide alcohol, benzoic acid benzyl ester, propylene carbonate and N,N-dimethylacetamide, **wherein,** the N-(n-butyl)thiophosphoric triamide content is in the range of 15-35 wt.%, wherein the composition comprises no methanol if the solvent is a sulfoxide and co-solvent is a trihydroxide alcohol, wherein the composition comprises 50-75 wt.% dimethyl sulfoxide and up to 20 wt.% benzyl benzoate, or the composition comprises 50-70 wt.% triethanolamine and up to 25 wt.% N,N-dimethylacetamide, or the composition comprises 20-40 wt.% triethanolamine and 30-55 wt.% propylene carbonate, or the composition comprises 30-50 wt.% dimethyl sulfoxide and 25-45 wt.% glycerine, wherein the composition additionally comprises a dye being 0.01-1 wt.% typical acid blue FG or an equivalent amount at a commercial concentration, as an additive to nitrogen fertilizers containing amide nitrogen, preferably to a fertilizer in the form of urea, highly concentrated nitrogen fertilizer in the form of an aqueous solution of urea and ammonium nitrate or a multicomponent fertilizer containing nitrogen, phosphorus and potassium.

**Patentansprüche**

1. Flüssige Zusammensetzung für Düngemittel, die Amidstickstoff enthält, wobei die Zusammensetzung einen Wirkstoff in Form von N-(n-Butyl)thiophosphorsäuretriamid und ein Lösungsmittelsystem umfasst, **wobei** der Gehalt an N-(n-Butyl)thiophosphorsäuretriamid im Bereich von 15-35 Gew.% liegt und das Lösungsmittelsystem ein Lösungsmittel, ausgewählt aus DMSO oder Aminoalkoholen in Form von Triethanolamin, in einem System mit mindestens einem Co-Lösungsmittel, ausgewählt aus: Trihydroxidalkohol, Benzoesäurebenzylester, Propylencarbonat und N,N-Dimethylacetamid, umfasst, wobei die Zusammensetzung kein Methanol umfasst, wenn das Lösungsmittel ein Sulfoxid und das Co-Lösungsmittel ein Trihydroxidalkohol ist, wobei die Zusammensetzung 50-75 Gew.% Dimethylsulfoxid und bis zu 20 Gew.-% Benzylbenzoat umfasst, oder die Zusammensetzung 50-70 Gew.-% Triethanolamin und bis zu 25 Gew.-% N,N-Dimethylacetamid umfasst, oder die Zusammensetzung 20-40 Gew.-% Triethanolamin und 30-55 Gew.-% Propylencarbonat umfasst, oder die Zusammensetzung 20-40 Gew.-% Triethanolamin und 30-55 Gew.-% Propylencarbonat umfasst.% Propylencarbonat, oder die Zusammensetzung umfasst 30-50 Gew.% Dimethylsulfoxid und 25-45 Gew.% Glycerin, wobei die Zusammensetzung zusätzlich einen Farbstoff im Bereich von 0,01-1 Gew.%, der typischerweise Säureblau FG ist, oder eine äquivalente Menge in einer kommerziellen Konzentration umfasst.

2. Flüssige Zusammensetzung nach Anspruch 1, **dadurch gekennzeichnet, dass** der Farbstoff nicht ein Farbstoff aus der Azofarbstoffgruppe ist.

3. Flüssige Zusammensetzung nach Anspruch 1, **dadurch gekennzeichnet, dass** der Farbstoff in fester Form vorliegt und ausgewählt ist aus der Gruppe bestehend aus Säureblau mit einer Konzentration im Bereich von 100-200%.

4. Verwendung der flüssigen Zusammensetzung, die einen Wirkstoff in Form von N-(n-Butyl)thiophosphorsäuretriamid, einen Farbstoff und ein Lösungsmittelsystem umfasst, das ein Lösungsmittel ausgewählt aus DMSO oder Aminoalkoholen in Form von Triethanolamin in einem System mit mindestens einem Co-Lösungsmittel umfasst, ausgewählt aus: Trihydroxidalkohol, Benzoesäurebenzylester, Propylencarbonat und N,N-Dimethylacetamid, **wobei der** Gehalt an N-(n-Butyl)thiophosphorsäuretriamid im Bereich von 15-35 Gew.-% liegt, wobei die Zusammensetzung kein Methanol enthält, wenn das Lösungsmittel ein Sulfoxid und das Co-Lösungsmittel ein Trihydroxidalkohol ist, wobei die Zusammensetzung 50-75 Gew .-% Dimethylsulfoxid und bis zu 20 Gew.-% Benzylbenzoat enthält, oder die Zusammensetzung 50-70 Gew.-% Triethanolamin und bis zu 25 Gew.-% N,N-Dimethylacetamid umfasst, oder die Zusammensetzung 20-40 Gew.-% Triethanolamin und 30-55 Gew.-% Propylencarbonat umfasst, oder die Zusammensetzung 30-50 Gew.-% Dimethylsulfoxid und 25-45 Gew.-% Glycerin umfasst, wobei die Zusammensetzung zusätzlich einen Farbstoff umfasst, der 0. 01-1 Gew.-% typisches Säureblau FG oder eine äquivalente Menge in einer handelsüblichen Konzentration, als Zusatz zu Stickstoffdüngern, die Amidstickstoff enthalten, vorzugsweise zu einem Dünger in Form von Harnstoff, hochkonzentriertem Stickstoffdünger in Form einer wässrigen Lösung von Harnstoff und Ammoniumnitrat oder einem Mehrkomponentendünger, der Stickstoff, Phosphor und Kalium enthält.

## Revendications

1. Composition liquide pour engrais contenant de l'azote amide, dans laquelle la composition comprend une substance active sous forme de N-(n-butyl) triamide thiophosphorique et
un système de solvants, **dans** lequel la teneur en N-(n-butyl) triamide thiophosphorique est comprise entre 15 et 35 % en poids. %, et le système de solvants comprend un solvant choisi parmi le DMSO ou les aminoalcools sous forme de triéthanolamine dans un système avec au moins un co-solvant choisi parmi : l'alcool trihydroxyde, l'ester benzylique de l'acide benzoïque, le carbonate de propylène et le N,N-diméthylacétamide, dans lequel la composition ne comprend pas de méthanol, si le solvant est un sulfoxyde et le co-solvant un alcool trihydroxyde, dans lequel la composition comprend 50-75 % en poids de sulfoxyde de diméthyle et jusqu'à 50 % en poids de triéthanolamine, dans lequel la composition comprend 50-75 % en poids de sulfoxyde de diméthyle et jusqu'à 50 % en poids de triéthanolamine et jusqu'à 25 % en poids de N,N-diméthylacétamide, ou la composition comprend 20 à 40 % en poids de triéthanolamine et 30 à 55 % en poids de carbonate de propylène, ou la composition comprend 30 à 50 % en poids de sulfoxyde de diméthyle et 25 à 45 % en poids de glycérine, dans laquelle la composition comprend en outre un colorant dans la gamme de 0,01 à 1 % en poids de bleu acide FG typique ou une quantité équivalente à une concentration commerciale.

2. Composition liquide selon la revendication 1, **caractérisée par le fait que** le colorant n'est pas un colorant du groupe des colorants azoïques.

3. Composition liquide selon la revendication 1, **caractérisée par le fait que** le colorant est sous forme solide et choisi dans le groupe constitué par le bleu acide avec une concentration comprise entre 100 et 200 %.

4. Utilisation de la composition liquide comprenant une substance active sous forme de N-(n-butyl) triamide thiophosphorique, un colorant et un système de solvant comprenant un solvant choisi parmi le DMSO ou les aminoalcools sous forme de triéthanolamine dans un système avec au moins un co-solvant choisi parmi : l'alcool trihydroxyde, l'ester de benzyle de l'acide benzoïque, le carbonate de propylène et le N,N-diméthylacétamide, **dans lequel** la teneur en N-(n-butyl)thiophosphorique triamide est comprise entre 15 et 35 % en poids. dans laquelle la composition ne comprend pas de méthanol si le solvant est un sulfoxyde et le co-solvant un alcool trihydroxyde, dans laquelle la composition comprend 50-75 % en poids de sulfoxyde de diméthyle et jusqu'à 20 % en poids de benzoate de benzyle, ou dans laquelle la composition comprend 50-70 % en poids de triéthanolamine et jusqu'à 25 % en poids de N,N-diméthylacétamide, ou la composition comprend 20-40 % en poids de triéthanolamine et 30-55 % en poids de carbonate de propylène, ou la composition comprend 30-50 % en poids de sulfoxyde de diméthyle et 25-45 % en poids de glycérine, dans laquelle la composition comprend en outre un colorant représentant 0,01-1 % en poids de bleu acide typique FG ou une quantité équivalente à une concentration commerciale, en tant qu'additif aux engrais azotés contenant de l'azote amide, de préférence à un engrais sous forme d'urée, un engrais azoté hautement concentré sous forme de solution aqueuse d'urée et de nitrate d'ammonium ou un engrais multicomposant contenant de l'azote, du phosphore et du potassium.

Fig. 1 NBPT urease inhibitor content as a function of time in the compositions of the invention.

EP 3 851 426 B1

☒ Samples immediately after stabilisation  ☐ Samples after 4 weeks in climatic chamber

Fig. 2. NBPT urease inhibitor content on a fertiliser carrier, four-week stability assays.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530714 A
- WO 2016054012 A1
- US 20140047882 A1
- WO 2017031186 A1
- WO 2010096266 A1
- US 20150101379 A1
- US 20070295047 A
- US 8425649 B2
- WO 2013107822 A1
- US 5698003 A
- WO 2017144698 A1
- PL 232924 B1
- US 20140090432 A1
- WO 2018152369 A1
- US 2019248714 A1